# EUROPÄISCHE PATENTSCHRIFT

(11) **EP 2 699 815 B1**
(45) Veröffentlichungstag und Bekanntmachung des Hinweises auf die Patenterteilung: **25.11.2015**
(21) Anmeldenummer: 12716366.5
(22) Anmeldetag: 18.04.2012
(51) Int. Cl.: F16D 11/14, F16H 25/20, H02K 7/06, F16D 11/00

(54) **ELEKTROMOTORISCHER LINEARANTRIEB**
ELECTROMOTIVE LINEAR DRIVE
ENTRAÎNEMENT LINÉAIRE DOTÉ D'UN MOTEUR ÉLECTRIQUE

(30) Priorität: 21.04.2011 DE 202011000964 U
(43) Veröffentlichungstag der Anmeldung: 26.02.2014
(73) Patentinhaber: Dewertokin GmbH, 32278 Kirchlengern (DE)
(72) Erfinder: OBERNDÖRFER, Andreas, 33739 Bielefeld (DE)
(74) Vertreter: Dantz, Jan Henning
(86) Internationale Anmeldenummer: PCT/EP2012/057059
(87) Internationale Veröffentlichungsnummer: WO 2012/143383

(56) Entgegenhaltungen:
- WO-A1-2009/097856
- DE-A1- 19 950 689
- GB-A- 700 706
- US-A1- 2009 014 272

## Beschreibung

Die Erfindung betrifft einen elektromotorischen Linearantrieb mit einem Gehäuse, in dem eine Antriebseinheit angeordnet ist, dessen Abtriebsglied als linear verfahrbare Spindelmutter ausgebildet ist, welche mit einem Anschlussteil zur Verbindung mit einem weiteren Bauelement in Wirkverbindung steht. Vorzugsweise ist das weitere Bauteil verstellbar. Die Spindelmutter kann fest mit einem Hubrohr verbunden sein, dessen freies Ende mit dem weiteren Bauteil gekoppelt ist.

Der elektromotorische Linearantrieb ist in bevorzugter Ausführung ein Möbelantrieb zum Verstellen von Möbelbauteilen. Ferner ist der Linearantrieb in bevorzugter Ausführung ein Einzelantrieb, d.h., in dem Gehäuse ist eine Antriebseinheit angeordnet, um das mit einem daran angeschlossenen Möbelbauteil zu koppelnde Hubrohr in der Längsrichtung zu verstellen.

Als Möbel kommen prinzipiell alle Möbel im häuslichen Bereich und im Pflege- und Hospitalbereich in Frage, welche beispielweise als Liege, Bett, Lattenrost, Sessel, Behandlungsliege, Krankenhaus- oder Pflegebett oder im erweiterten Sinne als Patientenlifter ausgebildet sind.

Die Antriebseinheit besteht aus einem mit einer Sicherheitsgleichspannung betreibbaren Elektromotor, an den ein Drehzahlreduziergetriebe, beispielsweise ein Schneckentrieb, angeschlossen ist. Über das Drehzahlreduziergetriebe wird eine Spindel angetrieben, auf die die das Abtriebsglied bildende Spindelmutter aufgesetzt ist. Im Betrieb des Linearantriebes verfährt je nach Drehrichtung des Antriebsmotors die Spindelmutter in Richtung zum freien Ende oder in Richtung zum Drehzahlreduziergetriebe. Die Antriebseinheit besteht bei dieser Ausführung aus den vorgenannten Bauteilen, jedoch ist das Hubrohr ein Verbindungsteil zwischen dem Abtriebsglied der Antriebseinheit und dem zu verstellenden Möbelbauteil.

Es sind elektromotorische Linearantriebe bzw. Möbelantriebe bekannt, bei denen im Normalbetriebszustand das angeschlossene Möbelbauteil elektromotorisch verstellt wird, d.h., wenn das zu verstellende Möbelbauteil durch Drehung der Spindel und durch Verfahren der Spindelmutter verfahren wird, bei denen die Spindelmutter durch einen Gabelkopf als Anschlussteil drehfest gehalten ist, wobei der Gabelkopf auf den Endbereich des Hubrohres aufgesetzt ist. Dieser Gabelkopf kann mit einer Ausrückkupplung versehen sein, so dass die Spindelmutter rotiert und auch noch gleichzeitig in Längsrichtung der Spindel verfahren wird, wenn diese Ausrückkupplung betätigt wird.

Sofern das Drehzahlreduziergetriebe ein Schneckentrieb ist, stehen die Achsen des Antriebsmotors und der Spindel im rechten Winkel zueinander. Das Flanschrohr kann fest mit dem Gehäuse verbunden sein, d.h., es kann ein einstückiges Formteil sein, es kann jedoch auch mittels geeigneter Befestigungsmittel am Gehäuse festgelegt sein. In dem Flanschrohr wird das Hubrohr geführt. Das Gehäuse ist üblicherweise aus zwei Gehäuseteilen gebildet.

Bei den Standardausführungen des elektromotorischen Linearantriebes sind die Bauteile aus einem Kunststoff gefertigt, mit Ausnahme der aus Stahl bestehenden Spindel, der Schnecke und des Antriebsmotors.

In dem Flanschrohr können noch weitere Bauteile, beispielsweise ein Schalter, installiert sein. Das Hubrohr hat üblicherweise einen kreisringförmigen Querschnitt.

Der Einsatz einer Ausrückkupplung ist für viele Einsatzzwecke problematisch, da beim Ausrücken der Kupplung das zu verstellende Möbelbauteil schlagartig abgesenkt wird, weil das Gewinde der Gewindespindel mit einem nicht selbsthemmenden Gewinde versehen ist. Um dies zu vermeiden, ist es bekannt, dass eine konstruktiv aufwändige Bremseinrichtung eingesetzt wird.

Des Weiteren sind Konstruktionen mit einer formschlüssigen Kupplung bekannt, wobei dessen Betätigung und Handhabung jedoch sehr umständlich und nicht benutzerfreundlich ausgebildet ist.

Die DE 199 50 689 offenbart einen Linearantrieb für einen Patientenlifter, bei dem an einem Kraftabnahmekopf zwei Kupplungsteile zueinander verstellbar sind, um eine drehfeste Verbindung zwischen den Kupplungsteilen zu lösen. Ober einen Bügel wird für ein Entriegeln eines der Kupplungsteile verschoben.

Der Erfindung liegt die Aufgabe zugrunde, eine konstruktiv einfache Lösung zur Trennung der Mitnahmeverbindung zwischen der Spindelmutter und dem Anschlussteil zu schaffen, die darüber hinaus äußerst einfach zu handhaben ist und ein schlagartiges Absenken eines Möbelbauteiles verhindert.

Die gestellte Aufgabe wird durch einen elektromotorischen Linearantrieb mit den Merkmalen des Anspruches 1 gelöst.

Die beiden Kupplungsteile im Zusammenwirken mit dem Anschussteil sind so ausgelegt, dass ein schlagartiges Absenken bei einem Entkoppeln der Mitnahmeverbindung verhindert wird. Dies wird erreicht, indem die Hemmung des Gewindes im selbstgehemmten Bereich oder im Übergangsbereich zum nichtselbsthemmenden Bereich angeordnet ist, und dass das zur Entkopplung manuell betätigbare Kupplungsteil wenigstens im ausgekuppelten Zustand manuell drehfest haltbar ausgebildet ist und wenigstens im ausgekuppelten Zustand in drehfester Verbindung mit der Spindelmutter steht. Die Entkoppelung ermöglicht es, dass zumindest die Spindelmutter und/oder das angeschlossene Hubrohr manuell verdreht wird, so dass die Spindelmutter in beiden Richtungen bewegt werden kann, je nach Drehrichtung des Kupplungsteiles.

Das zweite Kupplungsteil ist als Schiebehülse ausgebildet, die mit einer Innenprofilierung versehen ist, die im Normalbetriebszustand mit Profilierungen des ersten Kupplungsteiles und des Anschlussteiles in Eingriff steht. Die Mitnahmeverbindung kann dann in einfachster Weise durch eine Verschiebung der Schiebehülse aufgelöst werden, wenn diese in Längsrichtung der Spindel verfahren wird. Ist die Mitnahmeverbindung aufgelöst, kann die Spindelmutter durch das zweite Kupplungsteil manuell verdreht werden, so dass je nach den Bedürfnissen das angeschlossene Möbelbauteil angehoben oder abgesenkt werden kann. Dabei kann in einer Ausführung das zweite Kupplungsteil an seiner äußeren Manteloberfläche Profilierungen zur besseren manuellen Greifbarkeit aufweisen

Bei dieser Ausführung ist es dann besonders vorteilhaft, wenn das Anschlussteil an dem dem Hubrohr bzw. an dem der Spindelmutter zugewandten Endbereich einen umlaufenden Kragen aufweist, der eine Verzahnung aufweist, die aus Zähnen und Zahnlücken besteht, in die die Innenverzahnung der als zweites Kupplungsteil ausgebildeten Schiebehülse eingreift. Diese Verzahnung entspricht jedoch nicht einer genormten Verzahnung, sondern ist speziell für den Anwendungsfall ausgelegt.

Bei dieser Ausführung ist dann für die Funktion besonders vorteilhaft, wenn das erste Kupplungsteil als zylindrischer Profilkörper ausgebildet ist, der umfangsseitig mit in Längsrichtung des Hubrohres verlaufenden, radial offenen Nuten oder Rillen besteht, in die Profilierungen der Schiebehülse schließend eingreifen. Besonders vorteilhaft ist es dann, wenn die Innenprofilierung der Schiebehülse aus Axialstegen besteht, die in gleichen Winkelabständen zueinander angeordnet sind. Da diese Axialstege schließend in die Zahnlücken des Anschlussteiles und in die Nuten oder die Rillen des ersten Kupplungsteiles eingreifen, wird sinngemäß eine spielfreie Mitnahmeverbindung geschaffen, die jedoch so ausgelegt ist, dass eine Verschiebung der Schiebehülse mit einem geringstmöglichen Kraftaufwand möglich ist.

In bevorzugter Ausführung sind die Nuten und die Rillen des Profilkörpers und die Profilierung des Anschlussteiles so ausgelegt, dass das zweite Kupplungsteil bzw. die Schiebehülse zum Aus- und Einkuppeln in Richtung der Längsachse der Spindelmutter der Antriebseinheit verfahren werden kann.

Das Auskuppeln ist gemäß zwei verschiedenen Ausführungen derart möglich, dass gemäß einer bevorzugten Ausführung zum Auskuppeln das zweite Kupplungsteil bzw. die Schiebehülse in Richtung zur Spindelmutter bzw. in Richtung zum Getriebe und zum Motor bewegt wird. Dies hat den Vorteil, dass in dessen Weiterführung das zweite Kupplungsteil bzw. die Schiebehülse sowohl permanent manuell greifbar bleibt als auch in einer ununterbrochenen drehfesten Verbindung mit der Spindelmutter ausgebildet ist. Gemäß einer anderen alternativen Ausführungsform wird zum Auskuppeln das zweite Kupplungsteil bzw. die Schiebehülse vom Getriebe und vom Motor hinweg bewegt.

Dadurch bleibt die Mitnahmeverbindung zwischen den beiden Kupplungsteilen erhalten, so dass durch Drehung des zweiten Kupplungsteiles bzw. der Schiebehülse das Hubrohr gedreht werden kann.

Damit die axiale Stellung des zweiten Kupplungsteiles bzw. der Schiebehülse in allen Betriebszuständen exakt fixiert ist, ist vorgesehen, dass das Anschlussteil und das erste Kupplungsteil Anschlagflächen zur Begrenzung des zweiten Kupplungsteiles aufweisen, und dass die Schiebehülse innenseitig mit einem Anschlag, vorzugsweise einem segmentförmigen Anschlag, versehen ist, der an die jeweilige Anschlagfläche in dem jeweiligen Betriebszustand anliegt. Damit die Drehbewegung des Hubrohres erleichtert wird, ist vorgesehen, dass zwischen den einander zugewandt liegenden Flächen des ersten Kupplungsteiles und dem Anschlussteil ein Axiallager, vorzugsweise ein Axial-Rillenkugellager angeordnet ist. Dadurch wird die zu überwindende Reibkraft minimiert. Da die Schiebehülse einen deutlich größeren Durchmesser hat als das Hubrohr, ist zur Aufbringung des notwendigen Drehmoments die Kraft entsprechend gering. Zum optimalen Handling ist dann noch vorgesehen, dass die Schiebehülse umfangsseitig eine Profilierung aufweist, die beispielsweise aus Erhöhungen und Vertiefungen gebildet sind, wobei diese vorzugsweise in Längsrichtung verlaufen.

Zur zusätzlichen Sicherung des Anschlussteiles ist vorgesehen, dass das erste Kupplungsteil mit dem Anschlussteil durch eine Schraubverbindung gesichert ist.

Damit das zweite Kupplungsteil bzw. die Schiebehülse gegen ungewollte Verschiebung gesichert ist, ist vorgesehen, dass dieses bzw. diese im Bereich oder in der jeweiligen Endstellung eine überwindbare Verrastung aufweist. Wird das zweite Kupplungsteil bzw. wird die Schiebehülse mit erhöhtem Kraftaufwand in Längsrichtung der Spindel verschoben, so gerät die Verrastung außer Eingriff und das zweite Kupplungsteil bzw. die Schiebehülse bewegt sich von einem eingekuppelten Zustand in einen ausgekuppelten Zustand oder umgekehrt. In einer sehr einfach ausgestalteten Ausführung der Verrastung weist das zweite Kupplungsteil bzw. die Schiebehülse umfangsseitig wenigstens eine durch axiale Einschnitte gebildete Federzunge auf, die innenseitig eine Rastnase derart aufweisen, dass in den beiden Endstellungen die Federzunge spannungsfrei ist. Zum Verschieben von der einen Stellung in die andere Stellung muss dann eine Erhöhung oder ein Anschlag überwunden werden, so dass dazu die Schiebekraft entsprechend erhöht werden muss. In den beiden Endstellungen der Schiebehülse liegt die Rastnase dann an einer Seite der Erhöhung an.

Damit die Verbindung zwischen dem ersten Kupplungsteil und dem Kraftspeicher ohne Verschiebung der Teile sichergestellt ist, ist vorgesehen, dass das erste Kupplungsteil mittels eines Kraftspeichers belastet ist, wobei dessen Kraft in Richtung zum Anschlussteil wirkt.

Somit werden in dieser weiteren Ausführungsform das erste Kupplungsteil und das Anschlussteil mittels des Kraftspeichers, welcher vorzugsweise eine

Schraubenfeder aufweist, mit einer gewissen Kraft von einigen Newton derart zusammen gehalten, dass die Verzahnungen des Anschlussteils und des zweiten Kupplungsteils in der Normalbetriebsstellung im Eingriff gehalten werden. Dies kann beispielsweise dann von Vorteil sein, wenn der Linearantrieb lastfrei beispielsweise zu Testzwecken betrieben wird. Es sei noch bemerkt, dass der Kraftspeicher eine mechanische Begrenzung aufweist bzw. mit einer mechanischen Begrenzung versehen ist. Diese kann als eine Art Zuganker ausgebildet sein, wobei sich bei einer auf das Anschlussteil ausgeübten Krafteinwirkung in Richtung der Verstellkraft das erste Kupplungsteil und das zweite Kupplungsteil zunächst voneinander entfernen, dadurch der Kraftspeicher weiterhin gespannt wird und der Zuganker den Verschiebeweg zwischen dem Anschlussteil und dem ersten Kupplungsteil durch einen festen Anschlag begrenzt. Der Zuganker ist beispielsweise in Form einer Schraube mit aufgesetzter Mutter gebildet und weist somit einen mittleren Verbindungsteil mit Verdickungen im jeweiligen Endbereich auf. Dabei ist der Verschiebeweg zwischen dem ersten Kupplungsteil und dem Anschlussteil größer als die Länge der in axialen Richtung wirkenden Verzahnung zwischen dem zweiten Kupplungsteil und dem Anschlussteil ausgebildet.

Der entscheidende Vorteil dieser weiteren Ausführungsform besteht jedoch darin, dass der Linearantrieb gemäß dieser Ausführung ausschließlich Verstellkräfte nur in einer Verstellrichtung erzeugen kann. Somit kann der Linearantrieb das zu bewegende Möbelteil beispielsweise in Form eines Liegeelements eines Bettes oder in Form eines Hubarmes eines Patientenlifters, ausschließlich gegen die Scherkraft bewegen, während bei der Entstehung einer Verstellkraft in Richtung der Schwerkraft zunächst der Kraftspeicher weiter vorgespannt wird, sich allmählich die Verzahnungen zwischen dem ersten Kupplungsteil und dem Anschlussteil verschieben, bis dass sie außer Eingriff geraten und sich die drehfeste Verbindung zwischen dem zweiten Kupplungsteil und dem Schiebeteil in Folge dessen trennt, so dass sich auch die drehfeste Verbindung zwischen der Spindelmutter und dem Anschlussteil trennt. In vorteilhafter Weise ist somit eine Art Einklemmschutz gebildet, wobei der Linearantrieb das daran angeschlossene Möbelbauteil beispielsweise in Form eines Liegeelementes eines Bettes oder in Form eines Hubarmes eines Patientenlifters elektromotorisch nicht in Richtung der Scherkraft bewegen kann

Bei dieser zuvor genannten Anordnung mit einer Einklemmschutzfunktion ist die eingangs beschriebene, bevorzugte Ausführung zum Auskuppeln des zweiten Kupplungsteils bzw. der Schiebehülse in Richtung zur Spindelmutter bzw. in Richtung zum Getriebe und zum Motor gegeben. Im einfachsten Fall entfernen sich bei einer Aktivierung der Einklemmschutzfunktion das Anschlussteil und wenigstens das erste und/oder auch das zweite Kupplungsteil voneinander, wenn eine Verstellkraftkomponente in Wirkrichtung der Schwerkraft des zu verstellenden Möbelbauteils wirkt. Dabei sind Verschiebebegrenzungen vorgesehen, wobei das zweite Kupplungsteil mit dem ersten Kupplungsteil verharrt, während sich das Anschlussteil davon entfernt. Damit ist in einfachster Weise eine Trennung der Drehmitnahme zwischen dem Anschlussteil und dem ersten und/oder zweiten Kupplungsteil verwirklicht. Als Verschiebebegrenzungen kommen in unterschiedlichen Ausführungen Vorsprünge zum Einsatz, welche an dem zweiten Kupplungsteil radial nach innen vorspringen und daran angesetzt oder angeformt sind. Zusätzlich als Alternative oder in einer anderen Ausführungsform weist das erste Kupplungsteil Vorsprünge auf, welche radial nach außen weisen und ebenfalls angesetzt oder angeformt sind. Die Vorsprünge können durch Schraubenköpfe oder durch Flächenabschnitte von Verstemmungen, Vernietungen und/oder von Scheiben gebildet sein.

Anhand der beiliegenden Zeichnungen wird die Erfindung noch näher erläutert Es zeigen:
- Figur 1: ein Ausführungsbeispiel eines elektromotorischen Linearantriebes in Form eines Einzelantriebes in perspektivischer Darstellung,
- Figuren 2-4: das erste und das zweite Kupplungsteil in Verbindung mit dem Anschlussteil in Form eines Gabelkopfes in perspektivischen Darstellungen in drei verschiedenen Betriebsstellungen des zweiten Kupplungsteiles,
- Figuren 5-7: den Figuren 2-4 entsprechende Schnittdarstellungen,
- Figur 8: das erste und das zweite Kupplungsteil in Verbindung mit dem Gabelkopf und diversen Einzelteilen in sprengbildlicher Darstellung und

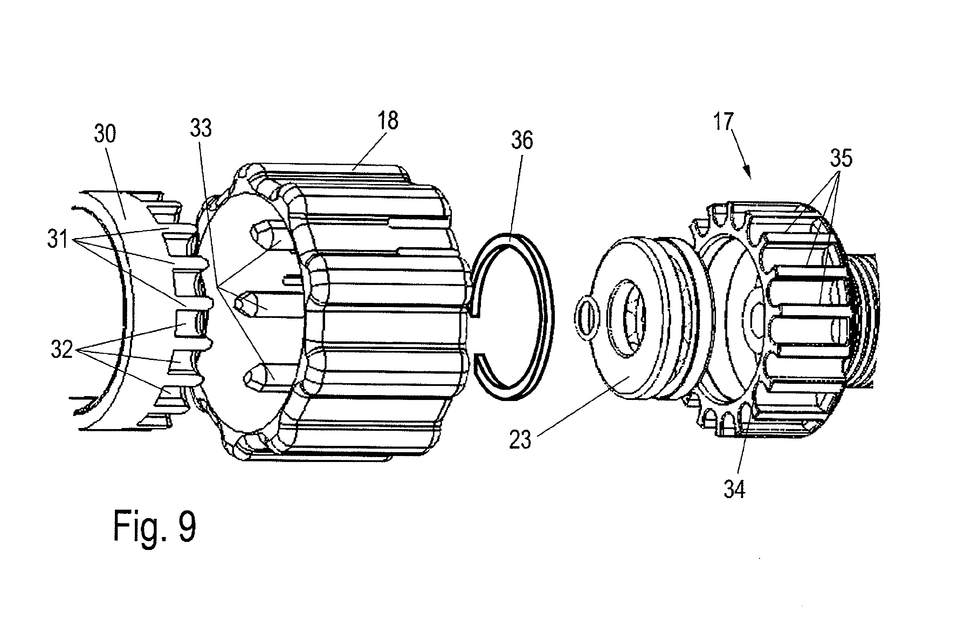

- Figur 9: eine Einzelheit gemäß der Figur 8 in vergrößerter Darstellung.

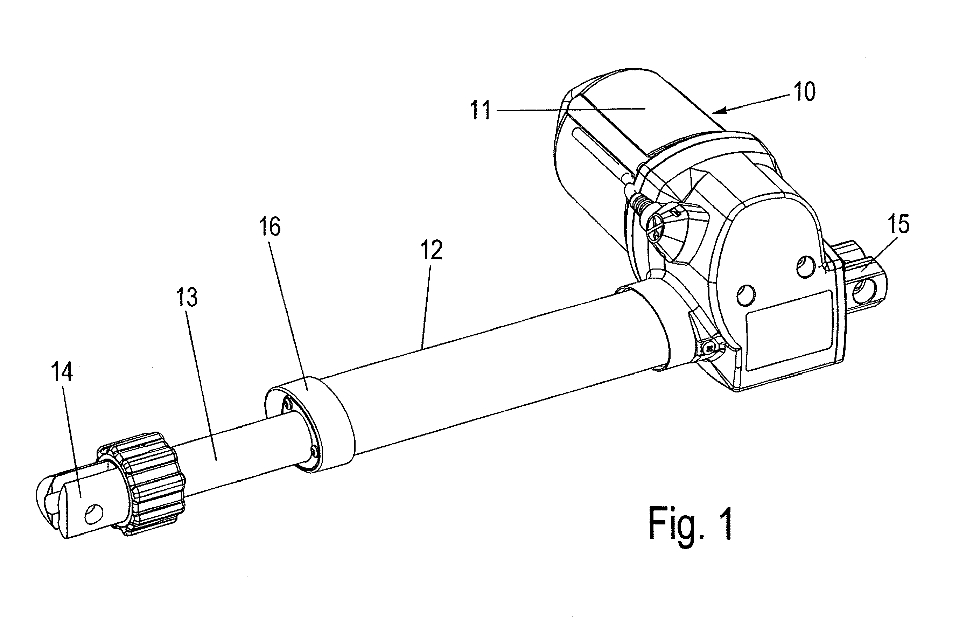

Der in der Figur 1 dargestellte elektromotorische Linearantrieb 10 ist als ein beispielhaftes Ausführungsbeispiel zu sehen. Der elektromotorische Linearantrieb 10 enthält ein nicht näher erläutertes Gehäuse, welches mehrteilig sein kann und aus Kunststoff gefertigt ist. In dem Gehäuse 11 sind bevorzugt der Antriebsmotor und das Drehzahlreduziergetriebe der Antriebseinheit montiert. Mit dem Drehzahlreduziergetriebe ist eine Spindel gekoppelt, die sich in Richtung eines an das Gehäuse 11 angesetzten Flanschrohres 12 erstreckt. In diesem Flanschrohr 12 sind in nicht näher dargestellter Weise eine Anzahl von Schalter angeordnet, welche in wenigstens einem Endbereich der Verfahrposition des Anschlussteils 14 den Motor steuernd abschalten. Weiterhin kann in einer anderen ebenfalls nicht näher dargestellten Ausführungsform in dem Flanschrohr 12 ein Wegmesssystem in Form eines Linearpotentiometers angeordnet sein, wobei das Linearpotentiometer einen Schleiferkontakt aufweist, welcher mit einer nicht näher dargestellten Spindelmutter mechanisch gekoppelt ist oder welcher in nicht näher dargestellter Weise mit dem Anschlussteil 14 gekoppelt ist. Das Abtriebsglied der Antriebseinheit bildet eine auf die Spindel aufgesetzte Spindelmutter, die gemäß dieses Ausführungsbeispiels in bekannter Weise mit einem ein- und ausfahrbaren Hubrohr 13 fest verbunden ist. Zur Koppelung des Hubrohres 13 mit einem Möbelbauteil ist auf das freie Ende als Anschlussteil ein Gabelkopf 14 aufgesetzt. Damit bei einem Verstellvorgang der elektromotorische Linearantrieb 10 verschwenkbar ist, ist an dem gegenüberliegenden Ende am Gehäuse 11 ein zweites Anschlussteil, vorzugsweise in Form eines Gabelkopfes 15 angeordnet. Während eines Verstellvorganges werden das erste und das zweite Anschlussteil relativ zueinander verstellt, so dass dadurch die daran angeschlossenen Möbelbauteile relativ zueinander verstellt werden. Auf das freie, dem Gehäuse 11 abgewandt liegendes Ende des Flanschrohres 12 ist ein allgemein bekanntes Führungselement 16 aufgesetzt.

Die Verbindung zwischen dem Hubrohr 13 und dem Gabelkopf 14 erfolgt durch ein erstes Kupplungsteil 17 und ein in Längsrichtung des Hubrohres 13 verschiebbares zweites Kupplungsteil 18.

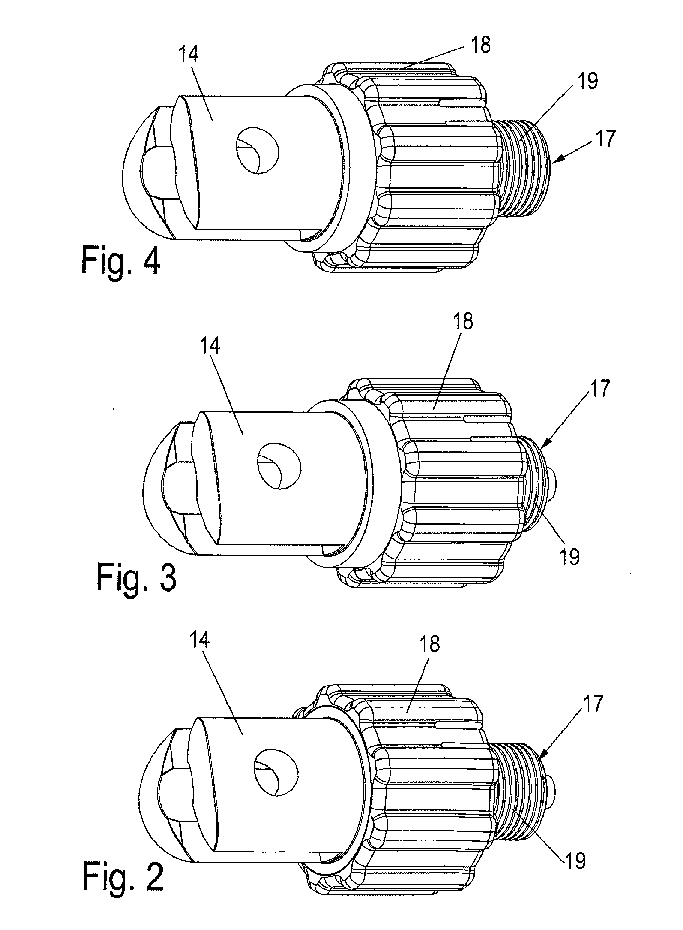

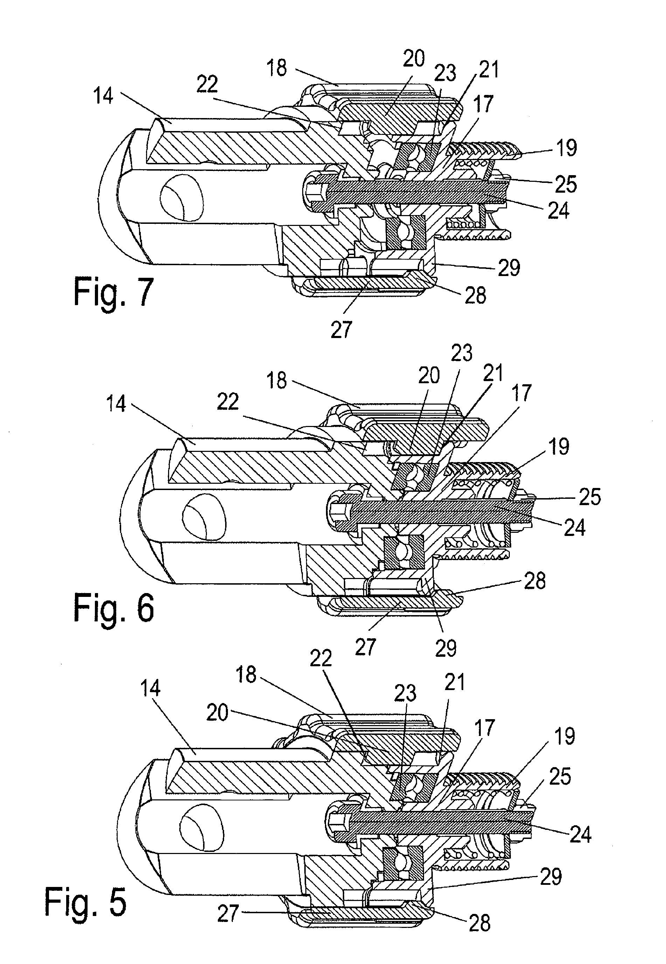

Wie ein Vergleich der Figur 2 mit den Figuren 3 und 4 und ein Vergleich der Figur 5 mit den Figuren 6 und 7 zeigt, ist das zweite Kupplungsteil 18 als Schiebehülse ausgebildet, deren Umfangsfläche profiliert ist. Im dargestellten Ausführungsbeispiel besteht diese Profilierung aus in Längsrichtung des Hubrohres 13 verlaufenden Stegen und Rillen. Dadurch lässt sich die Schiebehülse sehr einfach verfahren und zur Drehung des Hubrohres 13 verdrehen.

Das erste Kupplungsteil 17 weist an der der Antriebseinheit zugewandten Seite einen zylindrischen Ansatz 19 auf, welcher gemäß dieser Ausführung fest mit dem Hubrohr 13 verbindbar ausgebildet ist und ein Gewinde aufweist.

In den Figuren 2 und 5 ist die eingekuppelte Stellung des ersten Kupplungsteils 17 mit dem zweiten Kupplungsteil 18 dargestellt, d.h., das Hubrohr 13, die nicht näher dargestellte Spindelmutter und der Gabelkopf 14 stehen in einer Mitnahmeverbindung.

In den Figuren 3, 4, 6, 7 ist diese Mitnahmeverbindung ausgekuppelt, so dass durch Drehung des zweiten Kupplungsteiles 18 das Hubrohr 13 und die Spindelmutter ebenfalls verdreht wird. Dabei sind beide Drehrichtungen möglich. Gemäß den Darstellungen ist der Linearantrieb 10 als sogenannter Druckantrieb ausgebildet, wobei er zur Verstellung der angeschlossenen Möbelbauteile eine Druckkraft bzw. eine Schubkraft erzeugt, welche der von dem Möbelbauteil auf den Linearantrieb 10 einwirkenden Kraft entgegen wirkt. In den Figuren 4 und 7 steht das erste Kupplungsteil 17 und der als Anschlussteil ausgebildete Gabelkopf 14 im Abstand zueinander, während sich die als Kraftspeicher ausgebildete Schraubenfeder bzw. Druckfeder 37 weiter gespannt und der Länge nach verkürzt hat. Gemäß der Figuren 4 und 7 wird dieser besondere Betriebszustand eingenommen, sobald eine Verstellkraft in der entgegen gesetzten Richtung entsteht, welche der Kraftrichtung entspricht, welche durch das Möbelbauteil auf den Linearantrieb 10 einwirkt. Der Vorteil dieses besonderen Betriebszustandes liegt darin, dass die Verzahnungen des ersten Kupplungsteils und/oder des zweiten Kupplungsteils 18 mit der Gegenverzahnung außer Eingriff gerät, welche an dem Anschlussteil und/oder an dem Gabelkopf 14 angesetzt oder angeformt ist. Somit wird die drehfeste Verbindung zwischen dem Anschlussteil bzw. zwischen dem Gabelkopf 14 und der Spindelmutter getrennt, so dass bei einem weiteren Betrieb des Linearantriebs 10 die drehfeste Abstützung der Spindelmutter fehlt und sie als Folge dessen mit der Spindel frei rotiert. Dabei kann sie bei einem Betrieb des elektromotorischen Linearantriebs 10 wenigstens keine Zugkräfte bzw. in dessen kinematischem Umkehrschluss keine Druckkräfte erzeugen.

Das zweite Kupplungsteil 18 ist mit einem Führungsansatz 20 ausgestattet, wobei die Bewegung durch Anschlagflächen 21, 22 begrenzt wird.

Zur Verminderung der Reibung während einer Drehung des Hubrohres 13 ist auf einen Ansatz des ersten Kupplungsteiles 17 ein Axial-Rillenkugellager 23 aufgesetzt.

Die Figuren 5-8 zeigen, dass die Verbindung zwischen dem Gabelkopf 14 und dem ersten Kupplungsteil 17 durch eine Schraube 24 und auf das Ende des Schaftes aufgesetzte Mutter 25 gebildet ist, wobei die Schraube 24 und die Mutter 25 eine Art Zuganker bilden.

Wie besonders die Figuren 5-7 zeigen, ist das zweite Kupplungsteil 18 bzw. die Schiebehülse mit zwei parallel und im Abstand zueinander verlaufenden Einschnitten versehen, so dass eine Federzunge 27 gebildet wird. Diese Federzunge 27 ist innenseitig mit einem Mitnahmenocken 28 versehen, der in der eingerückten Stellung gegen einen Anschlag 29 anliegt. In der ausgerückten Stellung liegt dieser Mitnahmenocken 28 an der anderen Seite des Anschlages 29, d.h., beim Verschieben des zweiten Kupplungsteiles 18 federt die Federzunge 27 nach außen. Dabei verharrt die Schiebehülse 18 in der jeweiligen Schaltposition und rastet in wenigstens eine der Endstellungen ein. Durch einen erhöhten manuellen Kraftaufwand wird diese Verrastung jedoch aufgehoben, so dass sich die Schiebehülse wieder zurück in die vorherige Position schieben läßt.

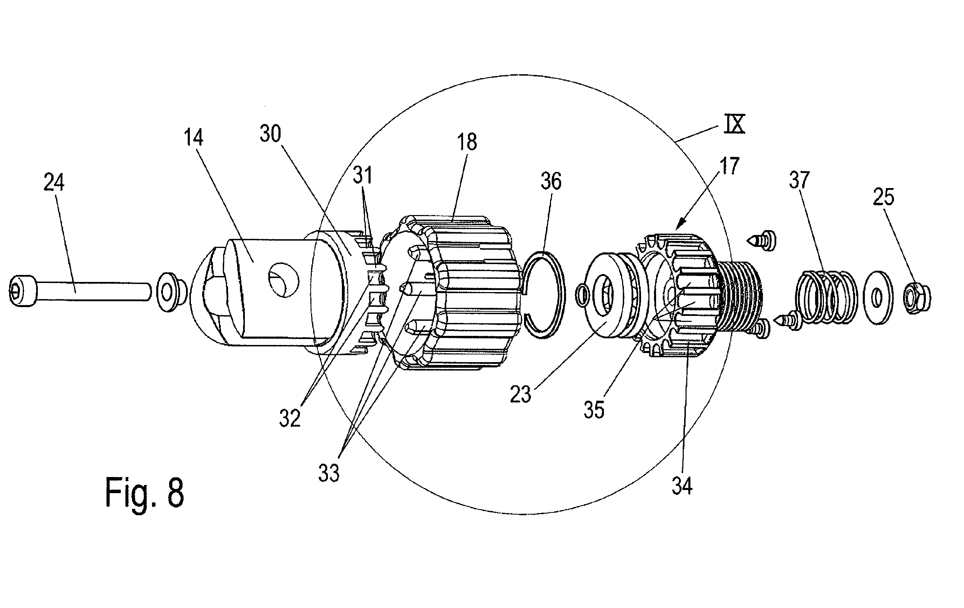

Die Figur 8 zeigt, dass das Anschlussteil 14 an der dem Hubrohr 13 zugewandten Seite einen umlaufenden Kragen 30 aufweist, der an der dem Hubrohr 13 zugewandten Seite eine Verzahnung aufweist, die aus Zähnen 31 und Zahnlücken 32 gebildet ist. Die Figur zeigt ferner, dass das zweite Kupplungsteil 18 bzw. die Schiebehülse innenseitig mit Axialstegen 33 ausgestattet ist, wobei die zugewandten Endbereiche in der Mitnahmestellung in die Zahnlücken 32 des Kragens eingreifen. Dieser Figur ist zu entnehmen, dass die Verbindung zwischen dem Anschlussteil 14 und dem zweiten Kupplungsteil 18 unterbrochen ist, wenn das zweite Kupplungsteil 18 in die in den Figuren 6 und 7 dargestellte Ausrückstellung verfahren wird. Zur Führung des zweiten Kupplungsteiles 18 ist das erste Kupplungsteil mit einem zylindrischen Profilkörper 34 ausgestattet, der in Längsrichtung des Hubrohres außenseitig mit Nuten oder Rillen 35 versehen ist, in die die Axialstege 33 des zweiten Kupplungsteiles 18 ständig eingreifen. Ferner sind gemäß der Ausführungsform nach Figur 8 die Axialstege 33 an dem zweiten Kupplungsteil 18 angeformt. Sie weisen in dem Endbereich, welche der Zahnlücken 32 zugewandt ist, schräg verlaufende oder schiffchenförmige Verjüngungen auf, um das Einkuppeln mit den Zähnen 31 einfacher zu ermöglichen.

Gemäß anderen nicht näher dargestellten Ausführungsformen sind Schiebehülse 18 und das die Axialstege 33 aufweisende zweite Kupplungsteil 18 mehrteilig ausgebildet. Weiterhin ist es denkbar, dass die Zähne 31 und die Zahnlücken 32 als Baueinheit an das Anschlussteil 14 angesetzt sind.

Die Figur 8 zeigt ferner, dass die axiale Sicherung des Axial-Rillenkugellagers 23 durch einen Sicherungsring 36 erfolgt, und dass das erste Kupplungsteil 17 durch eine Druckfeder 37 belastet ist, wobei die Wirkrichtung zum Anschlussteil 14 verläuft.

Wesentlich ist weiterhin, dass die Verzahnungen 34 des ersten Kupplungsteils 17 und die als Axialstege 33 ausgebildete Verzahnung des zweiten Kupplungsteils 18 permanent in formschlüssiger und drehfester Verbindung zueinander stehen, während die die als Axialstege 33 ausgebildete Verzahnung mit den Zahnlücken 32 oder während die Lücken der zwischen den Axialstegen 33 gebildeten Zahnlücken in die Zähne 31 je nach Stellung der Schiebehülse bzw. je nach Stellung des zweiten Kupplungsteils 18 manuell in eine Eingriffsstellung oder in eine Ausgreifstellung bringbar ist.
Gemäß der Ausführung nach den Figuren 2 bis 8 ist das erste Kupplungsteil 17 und das zweite Kupplungsteil 18 dem Hubrohr 13 und/oder der Spindelmutter zugeordnet und drehfest mit der Spindelmutter verbunden. Die aus den Zähnen 31 und den Zahnlücken 32 gebildete Gegenverzahnung ist dem Anschlussteil 14 zugeordnet, damit wenigstens drehfest verbunden oder gemäß den Ausführungen nach den Figuren 2 bis 8 als einstückiges Formteil ausgebildet.

In kinematischer Umkehr ist es auch denkbar, dass in einer anderen nicht näher dargestellten Ausführungsform das erste Kupplungsteil 17 und das zweite Kupplungsteil 18 dem Anschlussteil 14 zugeordnet ist, fest daran angesetzt ist oder mit dem Anschlussteil 14 ein einstückiges Formteil bildet.

Wegen der leichten Montierbarkeit sind alle Verzahnungen als offene Verzahnungen ausgebildet, wobei diese sich in Längsrichtung der Spindel und des Hubrohres 13 erstrecken, sich aber auch in umfangsseitiger Radialrichtung erstrecken. Dabei sind alle Verzahnungen nach Art einer Klauenkupplung ausgebildet. Gemäß einer weiteren nicht näher dargestellten Ausführungsform der Verzahnungen weist wenigstens ein Verzahnungspartner oder dessen Gegenverzahnung Bohrungen oder eingeformte Taschen auf, in dessen der andere Verzahnungspartner oder eine Gegenverzahnung mit Zähnen zumindest abschnittsweise eintaucht.

Die Erfindung ist nicht auf das dargestellte Ausführungsbeispiel beschränkt. Wesentlich ist, dass die Verbindung zwischen dem Hubrohr 13 und dem Anschlussteil 14 durch ein erstes Kupplungsteil 17 und ein zweites, verschiebbares Kupplungsteil 18 erfolgt, wobei die Mitnahmeverbindung zwischen dem zweiten Kupplungsteil 18 und dem Anschlussteil 14 gelöst wird, wenn das zweite Kupplungsteil 18 in Form einer Schiebehülse in Richtung zum Hubrohr 13 verfahren wird, so dass die Drehung des Hubrohres 13 durch Drehung des zweiten Kupplungsteils 18 erfolgt.

## Patentansprüche

1. Elektromotorischer Linearantrieb (10) mit einem Gehäuse (11), in dem eine Antriebseinheit angeordnet ist, dessen Abtriebsglied als linear verfahrbare Spindelmutter ausgebildet ist, welche mit einem Anschlussteil (14) zur Verbindung mit einem weiteren Bauelement in Wirkverbindung steht, wobei die Spindelmutter mit dem Anschlussteil (14) im Normalbetriebszustand über ein erstes und ein damit in Eingriff stehendes zweites Kupplungsteil (17, 18) in Eingriff steht, und dass durch Verschiebung von mindestens einem Kupplungsteil (18) in Längsrichtung der Spindel eine Mitnahmeverbindung zwischen der Spindelmutter und dem Anschlussteil (14) entkoppelbar ist, **dadurch gekennzeichnet, dass** das zweite Kupplungsteil (18) als Schiebehülse ausgebildet ist, die mit einer Innenprofilierung versehen ist, die im Normalbetriebszustand mit Profilierungen des ersten Kupplungsteiles (17) und mit Profilierungen des Anschlussteiles (14) in Eingriff steht, wobei Verzahnungen (34) des ersten Kupplungsteils (17) und die als Axialstege (33) ausgebildete Verzahnung des zweiten Kupplungsteils (18) permanent in formschlüssiger und drehfester Verbindung zueinander stehen, während die als Axialstege (33) ausgebildete Verzahnung mit den Zahnlücken (32) oder während die Lücken der zwischen den Axialstegen (33) gebildeten Zahnlücken in die Zähne (31) je nach Stellung der Schiebehülse bzw. je nach Stellung des zweiten Kupplungsteils (18) manuell in eine Eingriffsstellung oder in eine Ausgreifstellung bringbar ist.

2. Elektromotorischer Linearantrieb nach Anspruch 1, **dadurch gekennzeichnet, dass** das Anschlussteil (14) an dem dem Hubrohr (3) oder dem der Spindelmutter zugewandten Endbereich einen umlaufenden Kragen (30) aufweist, der eine Verzahnung aufweist, die aus Zähnen und Zahnlücken (31, 32) besteht, die in die Innenverzahnung der Schiebehülse eingreift.

3. Elektromotorischer Linearantrieb nach einem der vorstehenden Ansprüche, **dadurch gekennzeichnet dass** das erste Kupplungsteil (17) als zylindrischer Profilkörper ausgebildet ist, der umfangsseitig mit in Längsrichtung des Hubrohres (13) verlaufenden, nach außen offenen Nuten oder Rillen (35) besteht, in die Axialstege (33) des zweiten Kupplungsteiles (18) schließend eingreifen.

4. Elektromotorischer Linearantrieb nach Anspruch 3, **dadurch gekennzeichnet, dass** die Innenprofilierung des zweiten Kupplungsteiles (18) aus Axialstegen (33) besteht, die in gleichen Winkelabständen zueinander angeordnet sind.

5. Elektromotorischer Linearantrieb nach einem oder mehreren der vorstehenden Ansprüche, **dadurch gekennzeichnet, dass** das Anschlussteil (14) und das erste Kupplungsteil (17) Anschlagflächen (21, 22) zur Begrenzung der Schiebebewegung des ersten Kupplungsteiles (17) aufweisen, und dass das zweite Kupplungsteil (18) innenseitig mit einem Führungsansatz (20) versehen ist.

6. Elektromotorischer Linearantrieb nach einem oder mehreren der vorstehenden Ansprüche, **dadurch gekennzeichnet, dass** zwischen dem ersten Kupplungsteil (17) und dem Anschlussteil (14) ein Axiallager, vorzugsweise ein Axial-Rillenkugellager (23) angeordnet ist.

7. Elektromotorischer Linearantrieb nach einem oder mehreren der vorstehenden Ansprüche, **dadurch gekennzeichnet, dass** das erste Kupplungsteil (17) mit dem Anschlussteil (14) durch eine Schraubverbindung (24, 25) miteinander gekoppelt sind.

8. Elektromotorischer Linearantrieb nach einem oder mehreren der vorstehenden Ansprüche, **dadurch gekennzeichnet, dass** das erste Kupplungsteil (17) mittels eines Kraftspeichers (37) belastet ist, wobei dessen Kraft in Richtung zum Anschlussteil (14) wirkt.

9. Elektromotorischer Linearantrieb nach einem oder mehreren der vorstehenden Ansprüche, **dadurch gekennzeichnet, dass** das zweite Kupplungsteil (18) außenseitig eine Profilierung aufweist.

10. Elektromotorischer Linearantrieb nach einem oder mehreren der vorstehenden Ansprüche, **dadurch gekennzeichnet, dass** das zweite Kupplungsteil (18) gegen ungewollte Verschiebung durch eine in einer Endstellung wirksame überwindbare Verrastung gesichert ist.

11. Elektromotorischer Linearantrieb nach Anspruch 10, **dadurch gekennzeichnet, dass** das zweite Kupplungsteil (18) in Längsrichtung der Spindel verschiebbar ist, um die Verrastung außer Eingriff zu bringen und das zweite Kupplungsteil (18) von einem eingekuppelten Zustand in einen ausgekuppelten Zustand oder umgekehrt zu bewegen.

12. Elektromotorischer Linearantrieb nach einem oder mehreren der vorstehenden Ansprüche, **dadurch gekennzeichnet, dass** die Schiebehülsen und das die Axialstege (33) aufweisende Kupplungsteil (18) mehrteilig ausgebildet sind.

13. Elektromotorischer Linearantrieb nach einem oder mehreren der vorstehenden Ansprüche, **dadurch gekennzeichnet, dass** die Zähne (31) und die Zahnlücken (32) als Baueinheit an das Anschlussteil (14) angesetzt sind.

## Claims

1. An electromotive linear drive (10), comprising a housing (11) in which a drive unit is arranged, the output member of which is formed as a linearly displaceable spindle nut that is operatively connected to a connecting part (14) for connecting to another component, wherein the spindle nut is in engagement with the connecting part (14) in the normal operating state via a first coupling part and a second coupling part (17, 18) which is in engagement therewith, and a driving connection between the spindle nut and the connecting part (14) can be decoupled by displacement of at least one coupling part (18) in the longitudinal direction of the spindle, **characterized in that** the second coupling part (18) is formed as a sliding sleeve which is provided with an internal profiled section that is in engagement with profiled sections of the first coupling part (17) and with profiled sections of the connecting part (14), wherein toothings (34) of the first coupling part (17) and the toothing of the second coupling part (18), which toothing is formed as axial webs (33), are in permanent interlocking and torsion-proof connection with each other, while the toothing formed as axial webs (33) or while the gaps of the tooth spaces formed between the axial webs (33) can be brought manually into an engagement position or into a disengagement position depending on the position of the sliding sleeve or depending on the position of the second coupling part (18).

2. An electromotive linear drive according to claim 1, **characterized in that** the connecting part (14) comprises a circumferential collar (30) on the end region facing the lifting tube (3) or the spindle nut, said collar having a toothing which consists of teeth and tooth spaces (31, 32) which engage in the internal toothing of the sliding sleeve.

3. An electromotive linear drive according to one of the preceding claims, **characterized in that** the first coupling part (17) is formed as a cylindrical profiled body, which circumferentially consists of outwardly open grooves or flutes (35) extending in the longitudinal direction of the lifting tube (13), into which the axial webs (33) of the second coupling part (18) engage in a locking manner.

4. An electromotive linear drive according to claim 3, **characterized in that** the internal profiling of the second coupling part (18) consists of axial webs (3) which are arranged in equal angular distances with respect to each other.

5. An electromotive linear drive according to one or several of the preceding claims, **characterized in that** the connecting part (14) and the first coupling part (17) comprise stop surfaces (21, 22) for limiting the sliding movement of the first coupling part (17), and the second coupling part (18) is provided on the inner side with a guide protrusion (20).

6. An electromotive linear drive according to one or several of the preceding claims, **characterized in that** an axial bearing, preferably an axial deep-groove ball bearing (23), is arranged between the first coupling part (17) and the connecting part (14).

7. An electromotive linear drive according to one or several of the preceding claims, **characterized in that** the first coupling part (17) is coupled together with the connecting part (14) by a screwed connection (24, 25).

8. An electromotive linear drive according to one or several of the preceding claims, **characterized in that** the first coupling part (17) is loaded by means of an energy storage unit (37), wherein its force acts in the direction toward the connecting part (14).

9. An electromotive linear drive according to one or several of the preceding claims, **characterized in that** the second coupling part (18) has a profiling on the exterior.

10. An electromotive linear drive according to one or several of the preceding claims, **characterized in that** the second coupling part (18) is secured against inadvertent displacement by a latched connection which can be overcome and is effective in an end position.

11. An electromotive linear drive according to claim 10, **characterized in that** the second coupling part (18) is displaceable in the longitudinal direction of the spindle in order to bring the latched connection out of engagement and to move the second coupling part (18) from a coupled state to a decoupled state or vice versa.

12. An electromotive linear drive according to one or several of the preceding claims, **characterized in that** the sliding sleeves and the coupling part (18) having the axial webs (33) are formed in several parts.

13. An electromotive linear drive according to one or several of the preceding claims, **characterized in that** the teeth (31) and the tooth gaps (32) are fixed as a modular unit to the connecting part (14).

## Revendications

1. Entraînement linéaire électro-motorisé (10) comportant un boîtier (11) dans lequel est montée une unité d'entraînement dont l'élément de sortie est réalisé sous la forme d'un écrou de broche déplaçable linéairement qui est en liaison fonctionnelle avec une pièce de connexion (14) pour permettre sa liaison avec un autre composant, l'écrou de broche étant en prise avec la pièce de connexion (14) dans l'état de fonctionnement normal par l'intermédiaire d'une première pièce d'accouplement et d'une seconde pièce d'accouplement en prise avec celle-ci (17, 18) et, par coulissement d'au moins une pièce d'accouplement (18) dans la direction longitudinale de la broche, la liaison d'entraînement entre l'écrou de broche et la pièce de connexion (14) peut être dégagée, **caractérisé en ce que** la seconde pièce d'accouplement (18) est réalisée sous la forme d'un manchon coulissant qui est équipé d'un profilage interne qui, dans l'état de fonctionnement normal vient en prise avec des profilages de la première pièce d'accouplement (17) et avec des profilages de la pièce de connexion (14), les dentures (34) de la première pièce d'accouplement (17) et la denture de la seconde pièce d'accouplement (18) qui est réalisée sous la forme de tiges axiales (33) étant en permanence reliées solidairement en rotation par une liaison par la forme, alors que selon la position du manchon coulissant ou selon la position de la seconde pièce d'accouplement (18) on peut positionner manuellement, dans une position de prise ou hors de prise la denture réalisée sous la forme de tiges axiales (33) avec les intervalles entre les dents (32) ou les intervalles formés entre les tiges axiales (33) dans les dents (31).

2. Entraînement linéaire électro-motorisé conforme à la revendication 1,
**caractérisé en ce que**
la pièce de connexion (14) comporte, dans sa zone d'extrémité tournée vers le tube de levage (3) ou l'écrou de broche une collerette périphérique (30) équipée d'une denture constituée par des dents et des intervalles entre des dents (31, 32) qui vient en prise dans la denture interne du manchon coulissant.

3. Entraînement linéaire électro-motorisé conforme à l'une des revendications précédentes,
**caractérisé en ce que**
la première pièce d'accouplement (17) est réalisée sous la forme d'un corps profilé cylindrique qui est constitué sur sa périphérie par des rainures ou des nervures (35) ouvertes vers l'extérieur, s'étendant dans la direction longitudinale du tube de levage (13) dans lesquels viennent en prise des tiges axiales (33) de la seconde pièce d'accouplement (18).

4. Entraînement linéaire électro-motorisé conforme à la revendication 3,
**caractérisé en ce que**
le profilage interne de la seconde pièce d'accouplement (18) est constituée par des tiges axiales (33) qui sont situées à la même distance angulaire les unes par rapport aux autres.

5. Entraînement linéaire électro-motorisé conforme à l'une ou à plusieurs des revendications précédentes,
**caractérisé en ce que**
la pièce de connexion (14) et la première pièce d'accouplement (17) comportent des surfaces formant butées (21, 22) pour permettre de limiter le mouvement de coulissement de la première pièce d'accouplement (17) et la seconde pièce d'accouplement (18) est équipée côté interne d'un épaulement de guidage (20).

6. Entraînement linéaire électro-motorisé conforme à l'une ou à plusieurs des revendications précédentes,
**caractérisé en ce qu'**
entre la première pièce d'accouplement (17) et la pièce de connexion (14) est monté un palier axial, de préférence un palier à billes à rainures axiales (23).

7. Entraînement linéaire électro-motorisé conforme à l'une ou à plusieurs des revendications précédentes,
**caractérisé en ce que**
la première pièce d'accouplement (17) et la pièce de connexion (14) sont couplées entre elles par l'intermédiaire d'une liaison vissée (24, 25).

8. Entraînement linéaire électro-motorisé conforme à l'une ou à plusieurs des revendications précédentes,
**caractérisé en ce que**
la première pièce d'accouplement (17) est contrainte par un accumulateur de force (37) dont la force agit en direction de la pièce de connexion (14).

9. Entraînement linéaire électro-motorisé conforme à l'une ou à plusieurs des revendications précédentes,
**caractérisé en ce que**
la première pièce d'accouplement (18) comporte un profilage côté externe.

10. Entraînement linéaire électro-motorisé conforme à l'une ou à plusieurs des revendications précédentes,
**caractérisé en ce que**
la seconde pièce d'accouplement (18) est bloquée pour empêcher un coulissement involontaire par un élément d'encliquetage pouvant être surmonté de façon efficace dans une direction d'extrémité.

11. Entraînement linéaire électro-motorisé conforme à la revendication 10,
**caractérisé en ce que**
la première pièce d'accouplement (18) est mobile en coulissement dans la direction longitudinale de la broche pour mettre l'élément d'encliquetage hors de prise, et pour déplacer la seconde pièce d'accouplement (18) d'un état accouplé à un état découplé ou inversement.

12. Entraînement linéaire électro-motorisé conforme à l'une ou à plusieurs des revendications précédentes,
**caractérisé en ce que**
le manchon coulissant et la pièce d'accouplement (18) comportant les tiges axiales (33) sont réalisés en plusieurs parties.

13. Entraînement linéaire électro-motorisé conforme à l'une ou à plusieurs des revendications précédentes,
**caractérisé en ce que**
les dents (31) et les intervalles entre les dents (32) sont montés en tant qu'unité de construction sur la pièce de connexion (14).
